# EUROPEAN PATENT SPECIFICATION

(11) **EP 1 908 674 B1**
(45) Date of publication and mention of the grant of the patent: **07.04.2010**
(21) Application number: 07117919.6
(22) Date of filing: 04.10.2007
(51) Int. Cl.: B62D 63/06, B62D 21/14, B60B 35/10

(54) **Variable configuration vehicle**
Verstellbarer Fahrzeugrahmen
Véhicule à configuration variable

(30) Priority: 06.10.2006 IT MI20061921
(43) Date of publication of application: 09.04.2008
(73) Proprietor: Oto Melara S.p.A. con Unico Socio, 19136 La Spezia (IT); Università degli Studi di Genova - Dipartimento di Scienze per l'Architettura, 16126 Genova (IT); Politecnico di Milano, 20133 Milano (IT); Platania, Michele, 00153 Rome (IT); Maurizi, Pierluigi, 00153 Rome (IT)
(72) Inventor: Platania, Michele, 00153 Roma (IT); Maurizi, Pierluigi, 00153 Roma (IT); Sgherri, Roberto, 19025 Fezzano di Portovenere (La Spezia) (IT); Franceschi, Giuliano, 19100 La Spezia (IT)
(74) Representative: De Gregori, Antonella

(56) References cited:
- FR-A- 2 735 744
- GB-A- 2 311 967
- US-A- 3 854 747
- US-A- 5 560 444

## Description

The present invention concerns a variable configuration vehicle.

In particular, the present invention refers to a variable configuration land vehicle, usable for example as a support vehicle for pleasure boats, in which the passengers of the boat itself and/or bulky loads may move on land, preferably in a port environment, when the boat is moored.

Moreover, such vehicle may be used equally for limited transfers inside, for example, railway stations, airports and the likes.

Small size vehicles used by service personnel are known to the state of the art, for example in railway stations, airports, etc., usually electrically powered and often having both limited locomotion capacity and space for passengers and for loads. In fact, such vehicles are often equipped with a pulling trolley on which either objects or possibly passengers are carried. An example of such vehicle is described in document GB-A-234 967, which disclosure covers the preamble features of claim 1.

The Applicant has seized the problem of making a vehicle of such type which is sufficiently small and light, for example to be easily housed aboard a pleasure boat in the specially created space, and is at the same time both comfortable and large enough to accommodate people and possibly parcels or luggage.

The Applicant has made to this aim a vehicle having a stretchable chassis which allows the vehicle in closed position to be of extremely limited dimensions and in open position to be comfortable to accommodate a plurality of passengers and parcels.

The present invention concerns a variable configuration vehicle according to the features of claim 1.

The characteristics and advantages of the vehicle according to the present invention will be clearer and more obvious from the following exemplifying but not limiting description of an embodiment of the invention referring to the appended figures in which:

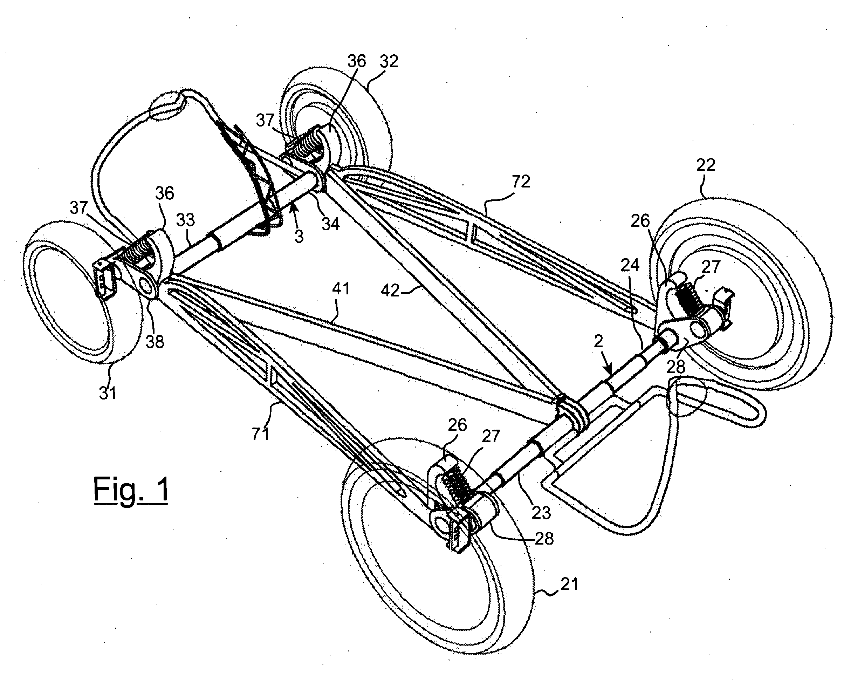

figure 1 represents a schematic perspective view of the chassis of the vehicle according to the present invention;

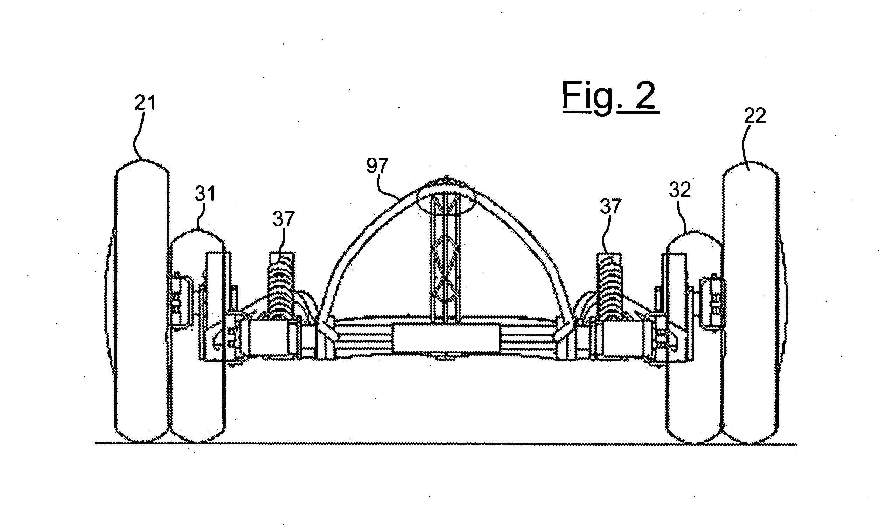

figure 2 represents a schematic rear view of the chassis of the vehicle according to the present invention;

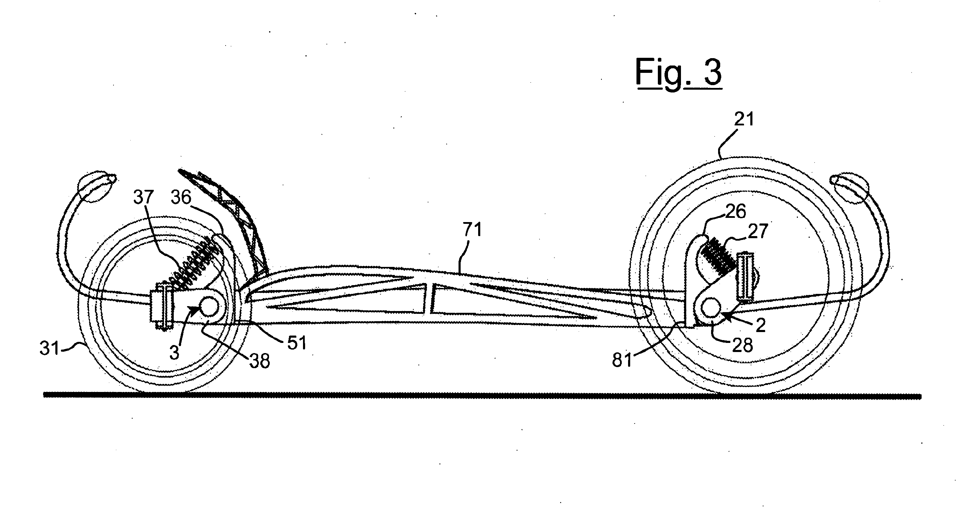

figure 3 represents a schematic side view of the chassis of the vehicle according to the present invention;

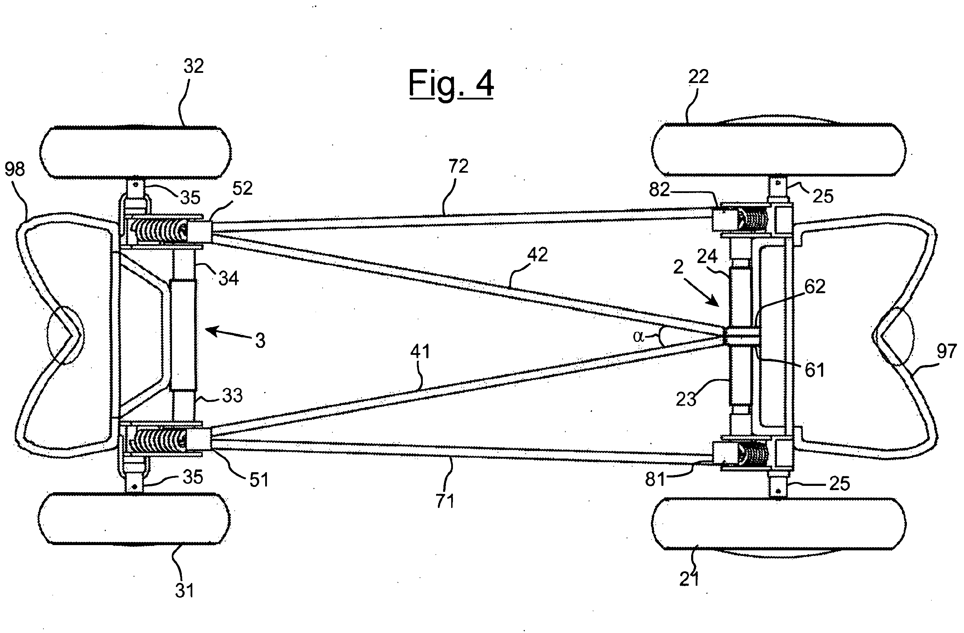

figure 4 represents a schematic view from above of the chassis of the vehicle in closed position according to the present invention;

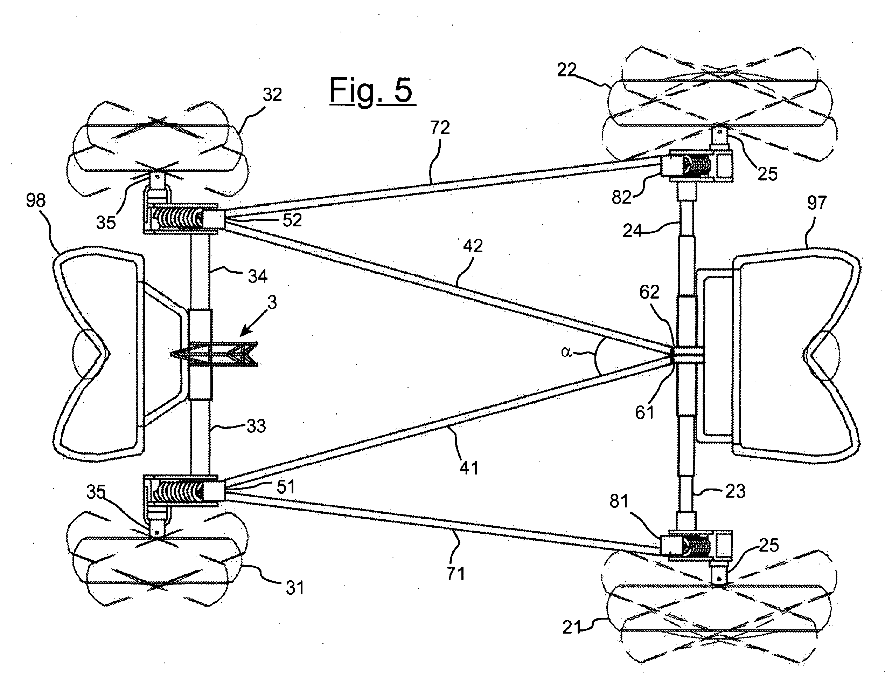

figure 5 represents a schematic view from above of the chassis of the vehicle in open position according to the present invention;

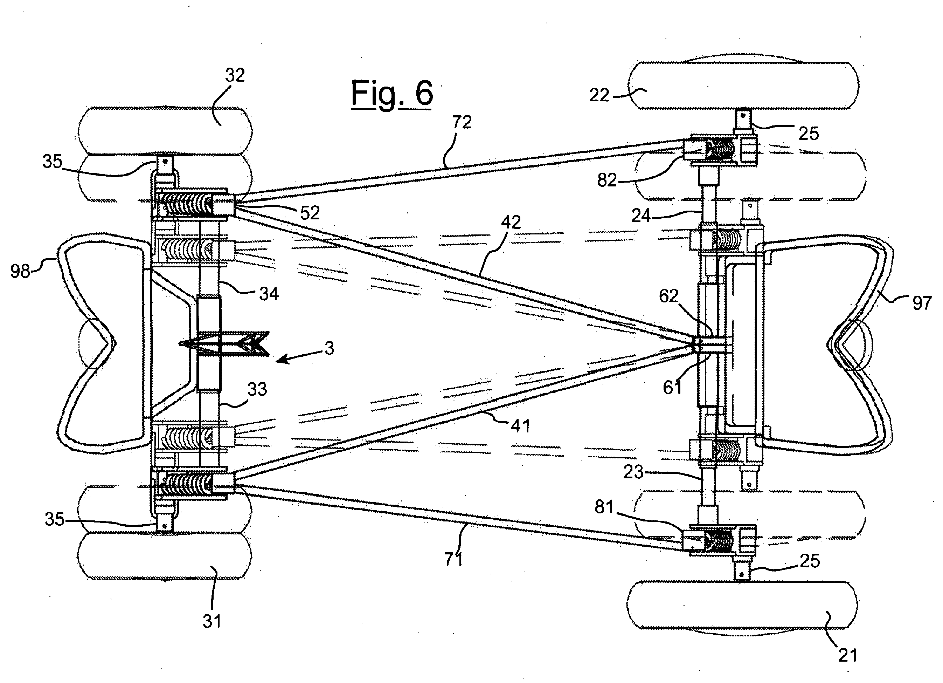

figure 6 represents a schematic view from above of the chassis of the vehicle with both positions (open and closed) visualised in particular according to the present invention.

In reference to the mentioned figures, the variable configuration vehicle according to the present invention comprises a chassis having a front axle 2 provided at opposed ends of a pair of wheels 21 and 22 and a rear axle 3 also provided with a conventional pair of wheels 31 and 32 joined to each other by a plurality of substantially longitudinal side members which join the front axle to the rear one of the vehicle. Each axle is equipped with a telescopic shaft formed for example by a pair of opposed telescopic jacks 23 and 24 or 33 and 34 which allow the axle to go from a closed position having a predetermined width to an open position having a width considerably greater than the width in closed position.

In particular, the chassis comprises a first pair of side members 41 and 42 linked at one of their ends to respective hinges 51 and 52 placed on the telescopic shaft of the rear axle 3 and at the end opposed to hinges 61 and 62 placed on a fixed central part of the telescopic shaft of the front axle. The hinges placed on the front shaft are conveniently brought closer or linked to each other so that the ends of the two side members are substantially joined to each other. The hinges 51 and 52 placed on the rear shaft are substantially linked to opposed ends in the mobile portions of the telescopic shaft so that when the telescopic shaft itself varies its length, the angle α included between the two side members and having its vertex in the hinges 61 and 62 varies as a result.

The chassis comprises a second pair of side members 71 and 72, arranged externally to such first pair of side members in relation to the longitudinal axis of the vehicle, linked at one of their ends to hinges 51 and 52 placed on the telescopic shaft of the rear axle which also link the ends of the first pair of side members 41 and 42 and at the end opposed to hinges 81 and 82 placed on the telescopic shaft of the front axle.

The hinges of such second pair of side members placed on the front shaft are arranged at opposed ends in the mobile portions of the telescopic shaft.

The two front and rear axles, through the mentioned telescopic shafts, are capable of varying their length, while varying the overall width of the vehicle. The side members, being linked to such telescopic axles through articulated hinges vary their angulation in relation to the longitudinal axis of the vehicle, do not prevent such width variation and maintain the conditions in both.

Therefore, the adjustable structure, which allows for the variations of the vehicle's width either on the front axle or on the rear axle, is substantially based on five hinges, with movements at constant angles.

The chassis is preferably made of a titanium structure and advantageously features the four powered wheels with independent suspensions. The motors are preferably electrical axial motors integral with the wheels.

The steering preferably features four very limited radius knuckles, which allow for rotating the vehicle with small radii of curvature.

Preferably, each wheel of the vehicle is hinged onto a shaft for the transmission of the movement 25 or 35 of rotation to these and is equipped with a suspension system comprising by way of example a bracket 26 or 36 linked to the chassis of the vehicle and a shock absorber 27 or 37 linked at one of its ends to said bracket and at the opposed end to the transmission shaft 25 and 35 of the respective wheel. Moreover, a lever 28 or 38 is hinged onto such transmission shaft, hinged in turn onto the end opposed to the respective telescopic shaft. In such a way, as an effect of the shock absorber, each wheel may oscillate independently, by exploiting the movement of the lever which rotates around the telescopic shaft.

The vehicle further features a first stand 97 associated with the front axle and a second stand 98 associated with the rear axle. They are in charge of lifting up the corresponding axle during the operations of variation of the dimensions of the axle itself, through the driving of the hydraulic cylinders of the telescopic shafts.

## Claims

1. Variable configuration vehicle comprising a chassis having a front axle (2) provided at opposed ends of a pair of wheels (21,22) and a rear axle (3) also provided with a conventional pair of wheels (31,32) joined to each other by a plurality of substantially longitudinal side members each axle being equipped with a telescopic shaft which allows each axle to go from a closed position having a predetermined width to an open position having a width considerably greater than the width in closed position **characterized in that**
said chassis comprises a first pair of side members (41,42) linked at one of their ends to respective hinges (51,52) placed on the telescopic shaft of the rear axle and at the end opposed to hinges (61,62) placed on a fixed central part of the telescopic shaft of the front axle,
the hinges placed on the front shaft are brought close or linked to each other so that the ends of the two side members are substantially joined to each other and the hinges placed on the rear shaft are substantially linked to opposed ends in the mobile portions of the telescopic shaft, so that when the telescopic shaft itself varies its length, the angle (α) included between the two side members varies as a result,
such chassis comprises a second pair of side members (71,72), arranged externally to such first pair of side members in relation to the longitudinal axis of the vehicle, linked at one of their ends to the hinges (51,52) which also link the ends of the first pair of side members and at the end opposed to hinges (81,82) placed on the telescopic shaft of the front axle,
the vehicle having four powered wheels with independent suspensions and each wheel is hinged onto a shaft for the transmission of the movement (25,35) of rotation to these and is equipped with a suspension system comprising a bracket (26,36) linked to the chassis of the vehicle and a shock absorber (27,37) linked at one of its ends to said bracket and at the opposed end to the shaft for the transmission of the movement of the respective wheel.

2. Vehicle according to claim 1, wherein each telescopic shaft (2,3) comprises a pair of opposed telescopic jacks (23,24; 33,34).

3. Vehicle according to claim 1, wherein the hinges (81,82) of such second pair of side members placed on the front shaft are arranged at opposed ends in the mobile portions of the telescopic shaft.

4. Vehicle according to claim 1, wherein the chassis is made of a titanium structure.

5. Vehicle according to claim 1, wherein the motors are preferably electrical axial motors integral with the wheels.

## Patentansprüche

1. Variabel konfigurierbares Fahrzeug umfassend einen Fahrzeugrahmen mit einer Vorderachse (2), die an gegenüber liegenden Enden mit einem Radpaar (21, 22) versehen ist, und einer Hinterachse (3), die ebenfalls mit einem konventionellen Radpaar (31, 32) versehen ist, wobei die Vorderachse (2) und die Hinterachse (3) über mehrere im Wesentlichen sich in Längsrichtung erstreckender Seitenelemente miteinander verbunden sind und wobei jede Achse mit einem teleskopischen Achskörper ausgestattet ist, welche es jeder Achse ermöglicht, von einer eingefahrenen Position mit einer vorgegebenen Breite auf eine ausgefahrene Position mit einer deutlich größeren Breite als die Breite der eingefahrenen Position auszufahren,
**dadurch gekennzeichnet, dass**
der genannte Fahrzeugrahmen ein erstes Paar Seitenelemente (41, 42) umfasst, die mit ihrem einen Ende an zugehörige Gelenke (51, 52) gekoppelt sind, die auf dem teleskopischen Achskörper der Hinterachse angeordnet sind, und mit dem gegenüber liegenden Ende an Gelenke (61, 62) gekoppelt sind, die auf einem feststehenden zentralen Teil des teleskopischen Achskörpers der Vorderachse angeordnet sind,
wobei die auf der Vorderachse angeordneten Gelenke dicht beieinander liegen oder miteinander gekoppelt sind, so dass die Enden der zwei Seitenelemente im Wesentlichen miteinander verbunden sind, und wobei die auf der Hinterachse angeordneten Gelenke im Wesentlichen mit den gegenüber liegenden Enden in den beweglichen Abschnitten des teleskopischen Achskörpers gekoppelt sind, so dass sich als Folge der zwischen den beiden Seitenelementen vorhandene Winkel (α) ändert, wenn der teleskopische Achskörper selbst eine Längenänderung erfährt,
wobei der Fahrzeugrahmen ein zweites Paar Seitenelemente (71, 72) umfasst, die in Bezug auf die Längsachse des Fahrzeuges außen von dem ersten Paar der Seitenelemente angeordnet sind und die mit ihrem einen Ende an die Gelenke (51, 52) gekoppelt sind, welche auch die Enden des ersten Paars der Seitenelemente koppeln, und die mit dem gegenüber liegenden Ende an Gelenke (81, 82) gekoppelt sind, die auf dem teleskopischen Achskörper der Vorderachse angeordnet sind,
wobei das Fahrzeug vier angetriebene Räder mit unabhängiger Aufhängung besitzt und wobei jedes Rad an einen Achskörper zur Übertragung einer Drehbewegung (25, 35) angelenkt und mit einem Aufhängungssystem ausgestattet ist, das einen mit dem Fahrzeugrahmen verbundenen Bügel (26, 36) und einen Stoßdämpfer (27, 37) umfasst, welcher an seinem einen Ende mit dem genannten Bügel und an dem gegenüber liegenden Ende mit dem Achskörper zur Übertragung der Bewegung des jeweiligen Rades verbunden ist.

2. Fahrzeug nach Anspruch 1, wobei jeder teleskopische Achskörper (2, 3) ein Paar sich gegenüber liegender teleskopischer Buchsen (23, 24; 33, 34) umfasst.

3. Fahrzeug nach Anspruch 1, wobei die Gelenke (81, 82) des auf der Vorderachse angeordneten zweiten Paares der Seitenelemente an sich gegenüber liegenden Enden in den beweglichen Abschnitten des teleskopischen Achskörpers angeordnet sind.

4. Fahrzeug nach Anspruch 1, wobei der Fahrzeugrahmen aus einer Titankonstruktion hergestellt ist.

5. Fahrzeug nach Anspruch 1, wobei die Motoren vorzugsweise elektrische Axialmotoren sind, die integral mit den Räder ausgebildet sind.

## Revendications

1. Véhicule à configuration variable, comportant un châssis ayant un essieu avant (2) doté aux extrémités opposées d'une paire de roues (21, 22) et un essieu arrière (3) doté également d'une paire classique de roues (31, 32) reliés l'un à l'autre par une pluralité d'éléments latéraux essentiellement longitudinaux, chaque essieu étant équipé d'un arbre télescopique qui permet à chaque essieu d'aller d'une position rapprochée présentant une largeur prédéterminée à une position élargie présentant une largeur considérablement supérieure à la largeur en position rapprochée,
**caractérisé en ce que**
ledit châssis comporte une première paire d'éléments latéraux (41, 42) reliés à l'une de leurs extrémités à des articulations (51, 52) respectives agencées sur l'arbre télescopique de l'essieu arrière et à l'extrémité opposée à des articulations (61, 62) agencées sur une partie centrale fixe de l'arbre télescopique de l'essieu avant,
les articulations agencées sur l'essieu avant sont rapprochées l'une de l'autre ou reliées l'une à l'autre de telle sorte que les extrémités des deux éléments latéraux sont globalement réunies l'une à l'autre, et les articulations agencées sur l'essieu arrière sont globalement reliées aux extrémités opposées dans les parties mobiles de l'arbre télescopique, de sorte que, lorsque l'arbre télescopique change lui-même de longueur, l'angle (α) délimité par les deux éléments latéraux change en conséquence,
ledit châssis comprend une deuxième paire d'éléments latéraux (71, 72), agencés à l'extérieur de ladite première paire d'éléments latéraux par référence à l'axe longitudinal du véhicule, reliés à l'une de leurs extrémités aux articulations (51, 52) qui relient également les extrémités de la première paire d'éléments latéraux, et à l'extrémité opposée à des articulations (81, 82) agencées sur l'arbre télescopique de l'essieu avant,
le véhicule comportant quatre roues motrices ayant des suspensions indépendantes, chaque roue est articulée sur un arbre servant pour la transmission du mouvement (25, 35) de rotation à celles-ci et est équipée d'un système de suspension comprenant une attache de fixation (26, 36) reliée au châssis du véhicule et d'un absorbeur de chocs (27, 37) relié à l'une de ses extrémités à ladite attache de fixation et à l'extrémité opposée à l'arbre servant pour la transmission du mouvement de la roue respective.

2. Véhicule selon la revendication 1, dans lequel chaque arbre télescopique (2, 3) comprend une paire de vérins télescopiques opposés (23, 24 ; 33, 34).

3. Véhicule selon la revendication 1, dans lequel les articulations (81, 82) de ladite deuxième paire d'éléments latéraux agencées sur l'essieu avant sont disposées à des extrémités opposées dans les parties mobiles de l'arbre télescopique.

4. Véhicule selon la revendication 1, dans lequel le châssis est constitué d'une structure en titane.

5. Véhicule selon la revendication 1, dans lequel les moteurs sont de préférence des moteurs axiaux électriques directement accouplés aux roues.
